# EUROPEAN PATENT APPLICATION

(11) **EP 2 184 263 A1**
(43) Date of publication of application: **12.05.2010**
(21) Application number: 08168457.3
(22) Date of filing: 06.11.2008
(51) Int. Cl.: C02F 1/50, C02F 1/28

(54) **Water purification device**

(71) Applicant: Unilever N.V., 3013 AL Rotterdam (NL)
(72) Inventor: Chatterjee, Jaideep, Bangalore, 560 066 (IN); Gupta, Santosh Kumar, Bangalore, 560 066 (IN); Ramachandran, Rajeeshkumar, Bangalore, 560 066 (IN)
(74) Representative: Rosen Jacobson, Frans Lucas M.

(57) **Abstract**

The present invention relates to a gravity fed water purification device.
It is an object of the present invention to provide a gravity fed purification device having a scavenger with relatively longer lifetime and/or reduction of concentration of biocide or byproduct thereof in water downstream of scavenger.
Accordingly there is provided a gravity fed water purification device comprising a biocide unit (BU), a reservoir (R) separated by a wall (W) from and positioned adjacently to a scavenger (S) comprising a media (M) capable of scavenging said biocide or byproducts thereof from water and a dispensing chamber (D) interconnected to define a flow path where the biocide is added by the biocide unit to the water in the reservoir (R) which flows over the wall (W) into the scavenger (S) and through an outlet (O) to the dispensing chamber, and, the outlet is positioned such that at least 10% by weight of said media (M) is below the lowest level of the outlet (O), and the wall (W) extends above the highest level of the media and above the lowest level of the outlet.

## Description

### Technical Field

The present invention relates to a gravity fed water purification device.

### Background and Prior Art

Gravity fed water purification devices are known in the art. WO2004000732 (Unilever) discloses a gravity fed water purification device comprising a filtration unit adapted to filter particulate material, and a biocide unit containing a biocide, in which the biocide is housed in a sealed chamber and is in fluid communication with the filtration unit such that water treated by the filtration unit is then gravity fed into the biocide unit and retained therein for a predetermined period, after which the water exits the system via a scavenger means which is adapted to recover leached biocide. The device includes a purification unit which in turn includes a top chamber and a bottom chamber separated by a partition and the filtration unit is secured to the partition and housed in the top chamber and the chemical purifying unit is housed in the bottom chamber. In use, water is poured into the top chamber and the purified water substantially free from particulate material, chemical purifying agent and microorganisms flows into a dispensing chamber for consumption.

One of the disadvantages associated with the prior art gravity fed water purification devices is that of relatively high depletion of biocide from water upstream of the scavenger, particularly when the device is not used for relatively long period of time. One way to ensure adequate biocide concentration upstream of scavenger means is to design a biocide unit to add relatively high amount of biocide in water in which case the scavenger means needs to remove relatively higher amount of the biocide which either reduces the scavenger lifetime or leads to relatively high amount of the biocide or byproduct thereof in the water downstream of the scavenger.

Another disadvantage associated with the prior art gravity fed water purification devices is relatively less scavenging efficacy leading to relatively high concentration of biocide or byproducts thereof downstream of the scavenger means which is undesirable and can alter taste and/or odour of purified water. The lifetime of scavenger means is also relatively small necessitating frequent replacement of scavenger means that leads to increased risk of microbial contamination.

Yet another disadvantage associated with the prior art gravity fed water purification devices is a possibility of microbial contamination of dispensing chamber, in particular during replacement of the scavenger by an operator or a user. Once the dispensing chamber or the surface downstream of scavenger means is microbially contaminated or contaminated water spills over into the dispensing chamber during replacement of the scavenger, the water in the dispensing chamber remains microbially contaminated as water reaching the dispensing chamber is substantially free from the biocide. The problem of microbial contamination may be reduced by cleaning the dispensing chamber and the surface downstream of the scavenger means with a disinfectant such as a hypochlorite solution or if the operator uses sterilized gloves. However, the operator in field or the user who replaces the scavenger means may not have adequate training and/or access to disinfectant or sterile gloves, leading to unsatisfactory performance of the device post-replacement of scavenger means.

It is an object of the present invention to overcome or ameliorate at least one of the disadvantages of the prior art, or to provide a useful alternative.

One of the objects of the present invention is to provide a gravity fed purification device having a scavenger with relatively longer lifetime and/or reduction of concentration of biocide or byproduct thereof in water downstream of scavenger.

### Summary of the Invention

According to the present invention there is provided a gravity fed water purification device comprising a biocide unit, a reservoir separated by a wall from and positioned adjacently to a scavenger comprising a media capable of scavenging said biocide or byproducts thereof from water and a dispensing chamber interconnected to define a flow path where the biocide is added by the biocide unit to the water in the reservoir which flows over the wall into the scavenger and through an outlet to the dispensing chamber, and,
a. the outlet is positioned such that at least 10% by weight of said media is below the lowest level of the outlet, and;
b. the wall extends above the highest level of the media and above the lowest level of the outlet.

### Brief Description of Drawings

Figure 1: A first embodiment of a gravity fed water purification device
Figure 2: A second embodiment of a gravity fed water purification device
Figure 3: Gravity fed water purification device of the second embodiment before detachment of the scavenger.
Figure 4: Gravity fed water purification device of the second embodiment after detachment of the scavenger.

### Detailed Description of the Invention

The scavenger comprises a media capable of scavenging the biocide or byproducts thereof from water. The media may scavenge biocide by reaction or by adsorption; preferably the media is an adsorbent media. Preferably, the adsorbent media is carbon. More preferably, the adsorbent media is activated carbon. Activated carbon is preferably selected from one or more of bituminous coal, coconut shell, wood, and petroleum tar. Surface area of the activated carbon preferably exceeds 500 m²/g; more preferably exceeds 1000 m²/g. Preferably, the activated carbon has size uniformity co-efficient of less than 2, more preferably less than 1.5. Preferably the activated carbon has Carbon Tetrachloride (CCl₄) number exceeding 50%, more preferably exceeding 60%. Preferably the activated carbon has an Iodine number greater than 800, more preferably greater than 1000. Preferably, the activated carbon may be used in granular form or in powder form. More preferably, activated carbon in form of a solid block is used. A solid block of activated carbon may be formed by using ceramic or non-ceramic binders by processes known in the art. Binders for making carbon blocks and processes for making blocks are known to a person skilled in the art, for example from W00703019 (Unilever), WO0703382 (Unilever), W007003259 (Unilever), W006069712 (Unilever), and WO05095284 (Unilever) which are incorporated herein by reference. Polymeric binders are preferred. Particularly preferred binders include high molecular weight polyethylene, high molecular weight polypropylene, ultra high molecular weight polyethylene, ultra high molecular weight poly propylene.

The outlet is positioned such that at least 10% by weight of the media is below the lowest level of the outlet. Preferably at least 75% by weight of the media is below the lowest level of the outlet. More preferably, substantially all of the media is below the lowest level of the outlet.

Preferably, the outlet is included in a partition which separates the scavenger from the dispensing chamber and the scavenger is detachably attachable to the partition such that the scavenger can be replaced by a person without making contact with interior of the device downstream of the outlet. Preferably the scavenger is detachably attachable to the rest of the device. The partition is located downstream from the scavenger and upstream from the dispensing chamber. The partition preferably includes a well-like recess to accommodate the scavenger. The partition preferably includes a hollow tubular protuberance extending towards the scavenger. The outlet is preferably included on the hollow tubular protuberance and positioned such that at least 10% by weight of the media is below the lowest level of the outlet.

Preferably the outlet is in the form of one or more openings in the partition that allow fluid communication between the scavenger and the dispensing chamber.

Preferably, the shape and/or the size of the outlet is configured such that human hand can not come in contact with the interior surface of the dispensing chamber whilst the scavenger is detached from the partition. It is possible to prevent the likelihood of human hand contacting the interior surface by selecting the cross-sectional area to be preferably less than 5 cm², more preferably less than 3 cm², and most preferably less than 2 cm². It is also possible to configure the shape of the outlet in form of one or more elongate openings having width preferably less than 1 cm, more preferably less than 0.5 cm.

The device comprises a wall that separates the reservoir and the scavenger positioned adjacently to each other. Accordingly, the reservoir is positioned on one side of the wall and the scavenger is positioned on the other side of the wall. The wall extends above the highest level of the media and above the lowest level of the outlet. Preferably, the wall extends above the scavenger. Top surface of the wall is preferably planar such that wall height does not vary substantially along the width of the wall. The wall is preferably vertical. The wall may be straight, zigzag or curved. The wall is preferably cylindrical.

Volumetric capacity of the device for holding water upstream of the scavenger and downstream of the wall is preferably less than 30%, more preferably less than 20% and most preferably less than 10% of volumetric capacity of the reservoir.

The biocide unit is adapted to add a biocide in the water in the reservoir. The biocide may be present in form of liquid or solid. Preferably, the biocide unit includes a biocide housed in a sealed chamber and adapted to contact the biocide with water such that the biocide is added to water. The biocide may be solid or liquid. The biocide is preferably a halogen in dissolved or ionic form. Biocide may be a soluble halogen compound or a halogenated ion exchange resin capable of releasing ionic halogen species. Chlorine and iodine are preferred biocides and chlorine is particularly preferred biocide. Chlorine compounds that may be used as biocide include alkali metal or alkaline earth metal salts of hypochlorite or dichloroisocyanuric acid or trichloroisocyanuric acid. When the biocide is used in a solid form, the biocide is preferably in form of a cylindrical tablet or a stack of tablets adapted to be contacted with water whereby the biocide is dissolved in the water at a predetermined rate. Preferred biocide tablet materials and biocide unit configurations are described in WO05095284 (Unilever) which is incorporated herein by reference. Preferably, the biocide unit includes a biocide housed in a sealed chamber and adapted to contact the biocide with water such that the biocide is added to water.

After addition of biocide, the water is preferably retained in the reservoir for a predetermined period. This can be achieved by any suitable means or device configurations. Preferred means of retaining water in the reservoir for a predetermined period or dwell time are known in the prior art, for example W02004000732 (Unilever) and WO05095284 (Unilever) which are incorporated herein by reference.

Preferably, the device comprises a top chamber adapted to receive water to be purified and located upstream of and in fluid communication with the reservoir.

Preferably the device comprises a filtration unit adapted to filter particulate material and located upstream of and in fluid communication with the reservoir. It is further preferred that the filtration unit is positioned between the top chamber and the reservoir defining a flow path where water flows from the top chamber to the reservoir through the filtration unit. It is particularly preferred that the biocide unit is located between the filtration unit and the reservoir defining a flow path where water flows from the top chamber, through the filtration unit, and then through the biocide unit into the reservoir.

Preferably, the dispensing chamber is provided with a dispensing means to dispense the purified water. More preferably, the dispensing means is a tap.

### Detailed description of drawings

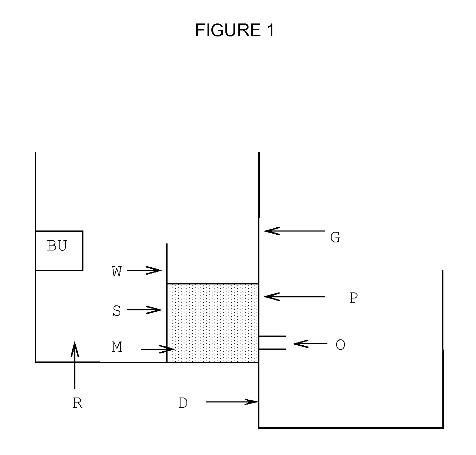

Now referring to Figure 1, the gravity fed water purification device (G) comprises a biocide unit (BU) having biocide (B) , a reservoir (R), separated by a wall (W) from and positioned adjacently to a scavenger (S) comprising a media (M) capable of scavenging the biocide or byproduct thereof from water and a dispensing chamber (D) interconnected to define a flow path where biocide is added by the biocide unit (BU) to water in the reservoir (R) which flows over the wall (W) to the scavenger (S) and through an outlet (O) to the dispensing chamber (D). The outlet (O) is positioned such that about 15% by weight of the media (M) is below the lowest level of the outlet (O), and; the wall (W) extends above the highest level of the media (M) and above the lowest level of the outlet (O). The outlet (O) is included in a partition (P) which separates the scavenger (5) from the dispensing chamber (D)

During use, reservoir (R) is filled with water from above. A biocide is added to the water in the reservoir (R) by a biocide unit (BU). When the water level in the reservoir is above the wall (W), the water flows from the reservoir (R) over the wall (W) to the scavenger (S) where it passes through the media (M) which scavenges the biocide and byproducts thereof from water which then flows through outlet (O) to the dispensing chamber (D). When the water level in the reservoir (R) falls and reaches the top of wall (W), the flow from the reservoir (R) to the scavenger (S) ceases isolating the water in reservoir (R) from contact with the media (M) whilst the water continues to flow under gravity from the scavenger (S) through the outlet (O) till it reaches the lowest level of the outlet (O). The positioning of lowest level of the outlet (O) ensures that at least 10% by weight media (M) remains submerged in water till fresh water is added again to the reservoir (R) when the flow cycle is repeated. The device (G) operates in batch mode where the flow cycle for a period is followed by a stagnation period during which there is no flow. It will be appreciated that the combination of features of positioning of outlet (O) and height of wall (W) allows reduction in amount of biocide or byproduct thereof in water that exits from scavenger (S) to the dispensing chamber (D), without causing significant depletion of biocide in the reservoir (R) during the stagnation period. The combination of the above features advantageously reduces leakage of water from the reservoir (R) or from the scavenger (S) to the dispensing chamber (D) when the scavenger is detached from the partition (P) thereby reducing possibility of contaminating dispensing chamber (D) by leakage of water which is likely to have been contacted by a person whilst detaching the scavenger (S) from the partition (P).

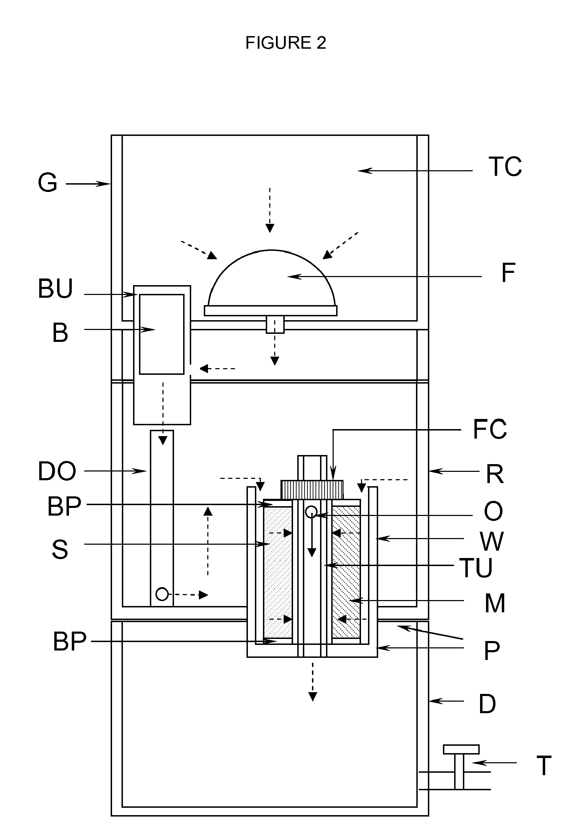

Now referring to Figure 2, the gravity fed water purification device (G) comprises a top chamber (TC), a filtration unit (F), a biocide unit (BU), a reservoir (R), separated by a wall (W) from and positioned adjacently to a scavenger (S) comprising a media (M) capable of scavenging the biocide or byproduct thereof from water and a dispensing chamber (D) interconnected to define a flow path indicated by dashed arrows where water flows from the top chamber (TC) and through the filtration unit (F) to the biocide unit (BU) adapted to add biocide (B) to water which flows through the downcomer (DO) to the reservoir (R) and over the wall (W) to the scavenger (S) and through an outlet (O) to the dispensing chamber (D) from where the purified water may be drawn by the user through tap (T). The filtration unit (F) is adapted to filter particulate material and the top chamber (TC) is adapted to receive water to be purified. The biocide unit (BU) includes tablets of sodium trichloro isocyanuric acid biocide (B) housed in a sealed chamber and adapted to contact the tablet with water such that sodium trichloro isocyanuric acid is added to the water. The provision of downcomer (DO) allows water to be retained in the reservoir (R) for a predetermined time before it passes to the scavenger (S). The scavenger (S) comprises activated carbon media (M) in form of an annular block attached to base plates (BP) at both ends. The partition (P) separates the scavenger (S) from the dispensing chamber (D). The partition (P) includes a cylindrical well-like recess and a hollow tubular protuberance (TU) positioned at the centre of the recess and extending vertically upwards, defining a housing where the annular scavenger (S) is placed. The hollow tube (TU) is provided with external threads near the top that engage with corresponding threads of the fastening cap (FC) such that the scavenger is detachably attachable to the partition. The outlet (O) is positioned on the hollow tube (TU) such that substantially all of the media (M) is below the lowest level of the outlet. The cylindrical wall (W) extends above the highest level of the media (M) and above the lowest level of the outlet (O).

During use, top chamber (TC) is filled from above with water. The water flows through the filtration unit (F) where particulates are removed and through the biocide unit (BU) where the biocide (B) is added to water and then through the downcomer (DO) to the reservoir (R). When the water level in the reservoir is above the wall (W), the water flows from the reservoir (R) over the wall (W) to the scavenger (S) where it passes through the media (M) in radially inward direction where the biocide and byproducts thereof are scavenged from water which then flows through outlet (O) to the dispensing chamber (D). When the water level in the reservoir (R) falls and reaches the top of the wall (W), the flow from the reservoir (R) to the scavenger (S) ceases isolating the water in reservoir (R) from contact with the media (M) whilst the water continues to flow under gravity from the scavenger (S) through the outlet (O) till it reaches the lowest level of the outlet (O). The positioning of lowest level of the outlet (O) ensures that substantially all of the media (M) remains submerged in water till fresh water is added again to the top chamber (TC) which then flows to the reservoir (R) when the flow cycle is repeated. The device (G) operates in batch mode where the flow cycle for a period is followed by a stagnation period during which there is no flow. It will be appreciated that the combination of features of positioning of outlet (O) and height of wall (W) allows reduction in amount of biocide or byproduct thereof in water that exits from scavenger (S) to the dispensing chamber (D), without causing significant depletion of biocide in the reservoir (R) during the stagnation period.

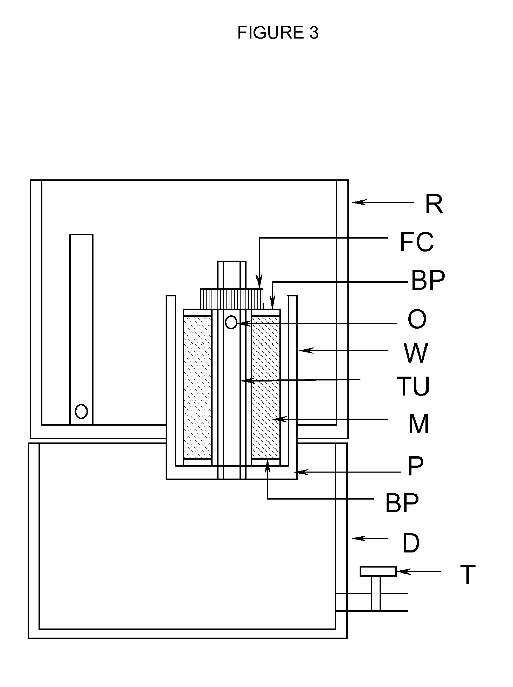

Now referring to Figure 3, which depicts the device from which the top chamber (TC), the biocide unit (BU) and filtration unit (F) from the reservoir (R) are detached to allow the user access to the scavenger for replacement thereof. The fastening cap (FC) is unscrewed from the hollow tube (TU) and the scavenger is removed for replacement. It is possible to replace scavenger without necessarily replacing other components such as filter unit or biocide unit thus providing flexibility to provide a scavenger with relatively longer life that needs relatively less frequent replacements as compared to other components of the device.

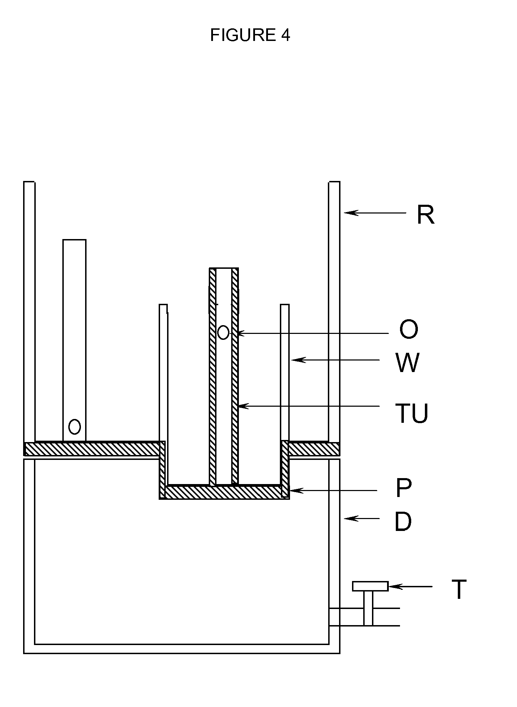

Now referring to Figure 4, which depicts the device from which the scavenger has been removed. The partition (P) is shown with hatched lines. The partition (P) includes a cylindrical well-like recess and a hollow tube (TU) positioned at the centre of the recess and extending vertically upwards, defining a housing where the annular scavenger (S) is placed.

It will be appreciated that the scavenger (S) can be detached for replacement individually by a person without making contact with a interior of device downstream of the outlet (O) thereby significantly reducing the possibility of contaminating whilst the scavenger (S) is being detached. The features of height of wall (W) and positioning of outlet (O) further advantageously reduce leakage of water from the reservoir (R) or from the scavenger (S) to the dispensing chamber (D) when the scavenger is detached from the partition (P) thereby reducing possibility of contaminating dispensing chamber (D) by leakage of water which is likely to have been contaminated by a person whilst detaching the scavenger (4) from the partition (9).

It is particularly important to significantly reduce chances of contamination of water downstream of scavenger (S) which is substantially free from the biocide and once contaminated, can not be decontaminated without complete disinfection of the dispensing chamber (D) and surfaces downstream of the scavenger (S).

### Examples

The invention will now be demonstrated with examples. The examples are by way of illustration only and do not limit the scope of the invention in any manner.

### Chlorine depletion during stagnation period and scavenger efficacy

Examples 1 was carried out with the device depicted in Figure 2. Comparative Example A was carried out with a device identical to the device of Example 1 in all respects except that it did not have a wall separating the reservoir from the scavenger. Devices of Examples 2, 3 and Comparative Example B were identical to the device of Example 1 in all respects except that the outlet was positioned such that 50%, 15% and 0% by weight of media, respectively, was below the lowest level of outlet.

### Procedure for measurement of chlorine depletion during stagnation

Water (10 L) was added to top chamber at the beginning of the experiment. During the flow cycle, water flowed from the top chamber to the filtration unit where particulate matter was removed. From filtration unit water flowed after contacting the biocide unit containing a single trichloroisocyanuric acid tablet (weight 7.5 g) where the biocide trichloroisocyanuric acid was added and then to the reservoir. At the end of the flow cycle, the water level in the reservoir stagnated near the top of the wall in devices of Examples 1-3 and Comparative Example B whilst the water level in the reservoir stagnated at the lowest level of the outlet of scavenger in the device of the Comparative Example A. Water was allowed to stagnate for 8 days simulating a condition when the device is not in use. Amount of chlorine was measured in water samples drawn from the reservoir at the beginning of stagnation period and every day after 5^{th} day. Procedure for estimation of chlorine given in "Standard Methods for the examination of water and waste water ", (Ed. Clesceri, L S, Greenberg, A E, Eaton, A D, 20th edition, 1998, Publishers APHA, AWWA and WEF) was followed. The results are expressed in terms of % of chlorine depleted as compared to initial chlorine (which was identical in both the cases).

### Procedure for evaluating scavenger efficacy for removal of biocide or byproduct thereof

Experimental procedure was similar except that instead of simulating stagnation of a week, flow cycles were repeated till the biocide tablet was completely consumed after passage of about 800 L of water through the device. Concentration of triazine triol, which is a byproduct of the biocide trichloroisocyanuric acid, was measured in the purified water in the dispensing chamber in all the devices after one biocide tablet was consumed. Higher concentration of triazine triol indicates lower scavenger efficacy and vice versa.

### Experimental results: chlorine depletion and scavenger efficacy

| Ex No | Wall | % Media below the lowest level of the port in the scavenger | Chlorine depletion in the reservoir after one week of stagnation (%) | Concentration of triazine triol (ppm) in water in dispensing chamber after exhaustion of 1 tablet |
|---|---|---|---|---|
| 1 | Yes | 99 | 54 | 0.5 |
| 2 | Yes | 80 | 54 | 0.6 |
| 3 | Yes | 15 | 54 | 0.9 |
| A | No | 99 | 86 | 0.5 |
| B | Yes | 0 | 54 | 3.0 |

### Results

From the results it is clear that the devices according to the present invention that combine the feature of wall with the positioning of the outlet (Examples 1-3) achieve significantly reduced chlorine depletion during stagnation period and relatively better scavenger efficacy. The device of Comparative Example A shows relatively better scavenger efficacy albeit at the cost of significantly higher chlorine depletion. On the other hand, device of Comparative Example B shows significantly reduced chlorine depletion albeit at the cost of relatively less scavenger efficacy. It can be also seen from Examples 1-3 that the scavenger efficacy increases with the increase in the amount of media (% by weight) that is below the lowest level of the outlet.

### Procedure for evaluating possibility of contamination during scavenger replacement

The experiments were carried out with the device of Example 1 and a prior art device according to Figure 2 of WO2004000732 (Comparative Example C). The prior art device did not have a partition separating the scavenger from the dispensing chamber and the scavenger physically resided in the dispensing chamber.

In simulated contamination experiments, scavenger was replaced by a gloved hand dipped in a 4 % sodium hypochlorite solution for 30 seconds, with sodium hypochlorite being used as simulated contaminant. The devices were then assembled for use. Water was filled into the top chamber. After an hour water samples were taken from the dispensing chamber ( ∼ 1 L ) and analyzed for the presence of sodium hypochlorite according to the procedure for estimation of hypochlorite given in "Standard Methods for the examination of water and waste water ", (Ed. Clesceri, L S, Greenberg, A E, Eaton, A D, 20th edition, 1998, Publishers APHA, AWWA and WEF). It was observed that the water from the dispensing chamber of the device of Example 1 had no detectable sodium hypochlorite (< 0.05 ppm) indicating reduced probability of any contaminant on hand contaminating the purified water in the dispensing chamber. On the other hand, the water taken from dispensing chamber of the device of Comparative Example C showed 2.5 ppm of sodium hypochlorite, indicating very high possibility of contamination of the water in dispensing chamber.

It will be appreciated that the gravity fed purification device according to the present invention provides reduction of concentration of biocide or byproduct thereof in water downstream of scavenger and has significantly reduced possibility of contamination of water in dispensing chamber.

## Claims

1. A gravity fed water purification device comprising a biocide unit, a reservoir separated by a wall from and positioned adjacently to a scavenger comprising a media capable of scavenging said biocide or byproducts thereof from water and a dispensing chamber interconnected to define a flow path where the biocide is added by the biocide unit to the water in the reservoir which flows over the wall to the scavenger and through an outlet into the dispensing chamber, and,
a. the outlet is positioned such that at least 10% by weight of said media is below the lowest level of the outlet, and;
b. the wall extends above the highest level of the media and above the lowest level of the outlet.

2. A gravity fed water purification device as claimed in claim 1 wherein at least 75% by weight of said media is below the lowest level of the outlet.

3. A gravity fed water purification device as claimed in claim 1 or 2 wherein substantially all of said scavenging media is below the lowest level of the outlet.

4. A gravity fed water purification device as claimed in claim 4 wherein volumetric capacity of the device for holding water upstream of said scavenger and downstream of said wall is less than 30% of volumetric capacity of the reservoir.

5. A gravity fed water purification device as claimed in any one of the preceding claims wherein said wall extends above said scavenger.

6. A gravity fed water purification device as claimed in any one of the preceding claims wherein said wall extends upwardly above the lowest level of the outlet

7. A gravity fed water purification device as claimed in any one of the preceding claims wherein said media is carbon.

8. A gravity fed water purification device as claimed in any one of the preceding claims wherein said biocide unit includes a biocide housed in a sealed chamber and adapted to contact said biocide with water such that said biocide is added to water.

9. A gravity fed water purification device as claimed in any one of the preceding claims wherein water is retained in said reservoir for a predetermined period.

10. A gravity fed water purification device as claimed in any one of the preceding claims comprising a top chamber adapted to receive water to be purified and located upstream of and in fluid communication with the reservoir.

11. A gravity fed water purification device as claimed in any one of the preceding claims comprising a filtration unit adapted to filter particulate material and located upstream of and in fluid communication with the reservoir.

12. A gravity fed water purification device as claimed in claim 11 wherein said filtration unit is positioned between the top chamber and the reservoir defining a flow path where water flows from the top chamber to the reservoir through the filtration unit.

13. A gravity fed water purification device as claimed in any one of the preceding claims wherein said outlet is included in a partition which separates said scavenger from said dispensing chamber and said scavenger is detachably attachable to said partition such that the scavenger can be replaced by a person without making contact with interior of the device downstream of the outlet.

14. A gravity fed water purification system as claimed in any one of the preceding claims wherein the shape and/or the size of said outlet are configured such that human hand can not come in contact with the interior surface of said dispensing chamber whilst said scavenger is detached from said partition.

15. A gravity fed water purification system as claimed in claim 14 wherein said outlet is has a cross-sectional area less than 5 cm².
